# EUROPÄISCHE PATENTSCHRIFT

(11) **EP 2 325 072 B1**
(45) Veröffentlichungstag und Bekanntmachung des Hinweises auf die Patenterteilung: **06.06.2012**
(21) Anmeldenummer: 10191220.2
(22) Anmeldetag: 15.11.2010
(51) Int. Cl.: B62K 19/30, B62J 11/00, B62J 99/00

(54) **Fahrradkabelhalterung**
Bicycle cable holder
Fixation à câble pour vélo

(30) Priorität: 24.11.2009 DE 102009054380
(43) Veröffentlichungstag der Anmeldung: 25.05.2011
(73) Patentinhaber: Klieber, Jochen, 83342 Tacherting (DE)
(72) Erfinder: Klieber, Jochen, 83342 Tacherting (DE)
(74) Vertreter: Kopf, Korbinian Paul

(56) Entgegenhaltungen:
- GB-A- 2 014 644
- US-A- 3 995 512
- US-A- 5 803 654
- US-A1- 2006 266 594

## Beschreibung

### GEBIET DER ERFINDUNG

Die vorliegende Erfindung betrifft eine Fahrradkabelhalterung zum Führen eines Kabels an einem Fahrradrahmen und einen Fahrradrahmen mit einer derartigen Fahrradkabelhalterung.

### HINTERGRUND DER ERFINDUNG

Fahrradkabel dienen beispielsweise dazu, einen am Fahrradlenker vorgesehenen Brems- oder Schalthebel mit einer an einer anderen Stelle vorgesehenen Brems- bzw. Schalteinrichtung, das heißt den Bremsen am Vorder- und/oder Hinterrad bzw. dem vorderen oder hinteren Schaltwerk, zu verbinden. Daneben sind auch Fahrradkabel bekannt, bei denen elektrische Energie von einer Energiequelle, zum Beispiel einem Dynamo oder eine Batterie- bzw. Akkueinheit, an eine Verbrauchseinrichtung, wie zum Beispiel Vorder- oder Rücklichtlampen, zu leiten. Um die Kabel von einem Ort des Fahrrads, beispielsweise aus dem Bereich des Vorbaus bzw. Lenkers, an einen anderen Bereich des Fahrrads, zum Beispiel das hintere Ausfallende, zu führen, sind Fahrradkabelhalterungen bekannt, zum Beispiel ringförmige Halter, durch die das Kabel geführt gehalten wird. Die ringförmigen Halter können an den Rahmen angeschweißt sein oder auch, mit einer Art Grundplatte versehen, in dafür vorgesehenen Schraublöchern des Rahmens festgeschraubt sein. Es hat sich jedoch gezeigt, dass bei diesen Kabelhalterungen das Kabel stets mit einem gewissen Abstand zum Rahmenrohr geführt wird. Dies bedeutet einen nicht so guten Halt des Kabels, was vor allem im Bereich von Sportfahrrädern ein Sicherheitsrisiko darstellt, da sich beispielsweise Gegenstände zwischen Rahmen und Kabel verfangen können. Außerdem eignen sich die beschriebenen Kabelhalter nur für das Führen einer vorgegebenen Zahl an Kabeln. Ein Nachrüsten ist nicht möglich, es sei denn, dass bereits von Anfang an mehrere Führungsöffnungen in Form von ringförmigen Ösen beispielsweise vorgesehen worden sind, was jedoch aus ökonomischen Gründen in der Regel nicht vorgenommen wird, da eventuell gar keine Nachrüstung erforderlich oder gewünscht ist. Die vorgehaltenen unbenutzten, vom Rahmen abstehenden Führungen wären außerdem ein Sicherheitsrisiko. Jedenfalls zeichnen sich die bekannten Fahrradkabelhalterungen auch dadurch nachteilig aus, dass sie sich als unflexibel bezüglich der Anzahl der aufzunehmenden Kabel erweisen.

In der US 2006/0266594 ist ein Befestigung eines Bremskabels im Zusammenhang mit einem Bremshebel beschrieben, der in der stirnseitigen Öffnung eines Lenkerrohrs eingesetzt und befestigt ist. Das Kabel ist mit dem Ende des Bowdenzug-Mantels in einer Haltevorrichtung gehalten, die mit einer Befestigungsvorrichtung verbunden ist, welche in die stirnseitige Öffnung des Lenkerrohrs eingesetzt ist. Mittels eines schraubenförmigen Befestigungselements lässt sich die Befestigungsvorrichtung gegen einen zumindest teilweise konischen Sitz pressen, um dadurch eine Verspannung der Befestigungsvorrichtung gegen die Innenwandungsfläche des Lenkerrohrs zu erreichen. Das Befestigungselement dient gleichzeitig auch zur Längsführung des Drahtseils des Bowdenzugs.

### ZUSAMMENFASSUNG DER ERFINDUNG

Es besteht daher ein Bedarf, eine Fahrradkabelhalterung zur Verfügung zu stellen, die ein sicheres und präzises Führen des Kabels ermöglicht und das Führen einer unterschiedlichen Anzahl an Kabeln erlaubt.

Gemäß einer beispielhaften Ausführungsform der Erfindung ist eine Fahrradkabelhalterung zum Führen wenigstens eines Kabels an einem Fahrradrahmen vorgesehen, die eine Haltevorrichtung und eine Befestigungsvorrichtung aufweist. Die Befestigungsvorrichtung ist in eine Aufnahme in einer Rohrwandung eines Rahmenrohrs eines Fahrradrahmens einsetzbar und mit der Wandung des Rahmenrohrs verbindbar. Die Haltevorrichtung ist mit der Befestigungsvorrichtung verbunden und zum Festlegen eines das zu haltende Kabel zumindest teilweise umgreifenden Haltemittels ausgebildet.

Das Vorsehen eines Haltemittels erlaubt die Anpassung an unterschiedliche Kabel bzw. unterschiedliche Anzahlen von zu führenden Kabeln. Das Einsetzen in eine Aufnahme in einer Rohrwandung eines Rahmenrohrs erlaubt das Anordnen der Fahrradkabelhalterung an den jeweils erforderlichen Stellen eines Fahrradrahmens.

Gemäß einer beispielhaften Ausführungsform der Erfindung dient die Kabelhalterung zum Führen von mehreren Kabeln.

Damit kann die beispielsweise auch die Befestigung unterschiedlicher Kabel zur Verfügung gestellt werden, was sich unter anderem günstig auf den Fertigungsaufwand auswirkt.

Beispielsweise ist die Aufnahme eine Öffnung in der Rohrwandung.

Diese lassen sich einfach vornehmen und bedeuten bei entsprechend geringer Dimensionierung nur einen unwesentlichen Einfluss auf die Belastbarkeit der Rahmenkonstruktion.

Gemäß einer beispielhaften Ausführungsform der Erfindung handelt es sich bei der Aufnahme um eine Vertiefung in einer, bezogen auf die Oberfläche durchgehenden, Rohrwandung.

Die Vertiefung bietet beispielsweise den Vorteil, dass das Rohrinnere auch bei nicht belegter Aufnahme gegen eindringenden Schmutz oder Feuchtigkeit geschützt ist.

Gemäß einer beispielhaften Ausführungsform der Erfindung ist das Kabel eine Leitung zur Übertragung einer mechanischen Kraft, beispielsweise eine Bremsleitung mit einem Bremskabel oder einer Bremsflüssigkeit, eine Schaltleitung mit einem Schaltkabel oder eine Steuerleitung zum Lösen und/oder Feststellen einer Sattelstützenklemme.

Gemäß einer beispielhaften Ausführungsform der Erfindung sind unterschiedliche Arten von Kabeln bzw. Leitungen mit der Fahrradkabelhalterung führbar.

Bei dem Kabel kann es sich beispielsweise aber auch um ein elektrisches Kabel mit einer oder mehreren elektrischen Leitungen handeln.

Gemäß einer beispielhaften Ausführungsform der Erfindung sind mehrere Leitungen sowohl zur Übertragung von mechanischer Kraft als auch zur Übertragung von elektrischer Energie in einem Kabel zusammengefasst.

Gemäß einer beispielhaften Ausführungsform der Erfindung ist ein Haltemittel vorgesehen, das ein Zugelement aufweist, welches um das zu haltende Kabel führbar ist, wobei das Haltemittel eine Festlegungsvorrichtung zum Verspannen des Zugelements aufweist.

Das Zugelement bietet den Vorteil, dass es an unterschiedlich ausgebildete Kabel, beispielsweise mit unterschiedlich dimensionierten Querschnitten und auch mit unterschiedlichen Querschnittsformen, angepasst werden kann und dadurch ein möglichst guter und sicherer Halt bzw. das sichere Führen der Leitung bzw. des Kabels ermöglicht werden.

Beispielsweise weist die Festlegungsvorrichtung eine Verrastungseinrichtung auf.

Die Verrastungseinrichtung gewährleistet den sicheren Halt des Zugelements im verspannten Zustand.

Gemäß einer beispielhaften Ausführungsform der Erfindung ist das Haltemittel ein Kabelbinder.

Die Verwendung eines Kabelbinders bietet ökonomische Vorteile und stellt einen Fahrradkabelhalter zur Verfügung, bei dem das Kabel zuverlässig gehalten ist, da das Zugelement sicher in der Verrastungseinrichtung des Kabelbinders gehalten ist. Darüber hinaus gewährleistet ein Kabelbinder, dass die Fahrradkabelhalterung das Kabel beim Überschreiten einer bestimmten Kraft, die auf das Kabel von außen einwirkt, beispielsweise bei einem Sturz, das Kabel freigibt, da die Verrastungseinrichtung bei Überschreiten einer bestimmten Zugkraft das Haltemittel nicht mehr halten kann, d.h. wenn die Zugkraft zu groß, ist und somit das Zugelement aus der Verrastungseinrichtung herauszieht. Dadurch wird gewährleistet, beispielsweise bei Hydraulikleitungen, dass es nicht zu einem Zerstören der Leitung bzw. des Kabels kommt, sondern sich lediglich die Fahrradkabelhalterung löst.

Gemäß einer beispielhaften Ausführungsform der Erfindung ist das Haltemittel integral mit der Haltevorrichtung ausgebildet.

Dadurch wird sowohl der Herstellungsprozess der Fahrradkabelhalterung als auch die Lagerhaltung wesentlich vereinfacht.

Gemäß einer beispielhaften Ausführungsform der Erfindung ist die Haltevorrichtung ein Steg, an dem das Kabel durch Umgreifen des Haltemittels festlegbar ist.

Der Steg bietet den Vorteil, dass er eine definierte Anschlagfläche bzw. Anlagefläche für die Außenwandung des Kabels bietet. Durch entsprechende Anordnung des Steges kann der Abstand des Kabels zu dem Fahrradrahmen definiert werden. Durch Einsetzen in eine Aufnahme in einer Rohrwandung kann der Steg so angeordnet werden, dass er geringfügig tiefer liegt im Verhältnis zu den angrenzenden Rohrwandungsflächen. Durch Verspannen des Haltemittels, beispielsweise eines Kabelbinders, kann somit das Kabel näher am Rahmen geführt werden bzw. unmittelbar am Rahmen geführt werden. Dies bedeutet neben einem optisch filigraneren Gesamterscheinungsbild des Rahmens auch einen sicherheitsrelevanten Aspekt, da sich bei einem an dem Rahmenrohr anliegenden Kabel keine Gegenstände zwischen Kabel und Rahmen verfangen können.

Gemäß einer beispielhaften Ausführungsform der Erfindung ist der Steg an beiden Enden mit der Befestigungsvorrichtung verbunden.

Dadurch wird gewährleistet, dass das Haltemittel nicht durch Verrutschen von dem Steg abrutschen kann, das heißt, das Kabel ist zuverlässig an dem Steg gehalten.

Gemäß einer beispielhaften Ausführungsform der Erfindung weist die Befestigungsvorrichtung eine umlaufende Wandung auf, und die Haltevorrichtung ist zwischen zwei gegenüberliegenden Wandbereichen der umlaufenden Wandung angeordnet.

Die Haltevorrichtung ist damit in der Lage, die auf sie wirkende Haltekraft an die umlaufende Wandung abzugeben. Von dort kann dann die Haltekraft an den Fahrradrahmen abgetragen werden. Die umlaufende Wandung bietet den Vorteil, dass dadurch auch die Haltevorrichtung stabilisiert wird und zusätzlich die Befestigungsvorrichtung die Kraft von der Haltevorrichtung besser verteilt übertragen kann.

Gemäß einer beispielhaften Ausführungsform der Erfindung ist die Befestigungsvorrichtung rohrförmig ausgebildet, und die Haltevorrichtung erstreckt sich zwischen zwei gegenüberliegenden Rohrwandbereichen.

Die rohrförmige Ausbildung bietet den Vorteil, dass sich eine derartige Befestigungsvorrichtung leichter in eine Aufnahme einer Rohrwandung eines Rahmenrohrs einbringen lässt. Die Ausbildung der Haltevorrichtung zwischen zwei gegenüberliegenden Rohrwandbereichen bietet den Vorteil, dass die Befestigungsvorrichtung auf ihrer Außenseite, nämlich auf der Außenseite der rohrförmigen Hülse, an die Aufnahme der Rahmenrohrwandung angepasst werden kann.

Gemäß einer beispielhaften Ausführungsform der Erfindung ist die Befestigungsvorrichtung becherförmig ausgebildet, wobei das einzuführende Ende geschlossen ist und die Haltevorrichtung im Bereich der Öffnung angeordnet ist.

Die Ausbildung einer geschlossenen Befestigungsvorrichtung gewährleistet, dass die Aufnahme in dem Fahrradrahmenrohr nach außen hin geschlossen ist, das heißt, dass durch die Fahrradkabelhalterung kein Schmutz oder keine Feuchtigkeit in die Aufnahme eindringen kann, beispielsweise bei einer Öffnung in der Rohrwandung.

Gemäß einer beispielhaften Ausführungsform der Erfindung ist die Befestigungsvorrichtung mit der Rohrwandung des Rahmenrohrs formschlüssig verbindbar.

Durch die formschlüssige Verbindung ist eine zusätzliche Befestigung der Fahrradkabelhalterung an dem Rahmen nicht erforderlich.

Gemäß einer beispielhaften Ausführungsform der Erfindung sind an der Befestigungsvorrichtung mindestens zwei nach außen abstehende Vorsprünge vorgesehen, die ausgebildet sind, um im eingesetzten Zustand die Rohrwandung des Rahmenrohrs im Bereich der Öffnungsränder zu hintergreifen.

Das Hintergreifen der Rohrwandung gewährleistet, dass die Fahrradkabelhalterung aus der Aufnahme nicht herausgezogen werden kann.

Gemäß einer beispielhaften Ausführungsform der Erfindung ist die Fahrradkabelhalterung in die Öffnung des Rahmenrohrs einklippbar.

Beispielsweise sind dazu die Vorsprünge mit einem Schnappmechanismus versehen. Zum Beispiel können hintergreifende Vorsprünge federnd ausgebildet sein.

Zum leichteren Einsetzen können gemäß einer weiteren beispielhaften Ausführungsform auch Einführschrägen an der Befestigungsvorrichtung vorgesehen sein.

Unter einklippbar wird im Rahmen der vorliegenden Erfindung beispielsweise ein Befestigungsmechanismus verstanden, bei dem die Fahrradkabelhalterung in die Öffnung eingesetzt oder auch eingedrückt wird und die Verbindung, das heißt die Befestigung an dem Rahmenrohr durch einrastende oder einklipsende bzw. einklippende Arretiermittel erfolgt. Beispielsweise können derartige Arretiermittel in Eingriff stehen mit den Öffnungsrändern der Rohrwandung. Beispielsweise können Arretiermittel aber auch zusätzlich oder alternativ mit entsprechend ausgeprägten Gegenstücken in Eingriff stehen, die an dem Rahmenrohr bzw. in dem Rahmenrohr vorgesehen sind.

Gemäß einer beispielhaften Ausführungsform der Erfindung kann der Außendurchmesser der Befestigungsvorrichtung auch so ausgelegt sein, dass er geringfügig größer ist als der Innendurchmesser der Aufnahme des Rahmenrohrs, in das Halterung eingesetzt werden soll.

Je nach Material kann das Einsetzen zum Beispiel ein Einschlagen oder Einpressen bzw. Eindrücken erfordern.

Je nach erreichbaren Klemmkräften, was wiederum abhängig zum Beispiel von den Materialien oder den erzielbaren Fertigungsgenauigkeiten ist, kann dann auf eine weitere Verbindung mit dem Rahmenrohr eventuell verzichtet werden, was wiederum Vorteile beim Fertigungsprozess bedeutet.

Gemäß einer beispielhaften Ausführungsform der Erfindung ist die Befestigungsvorrichtung mit der Rohrwandung des Rahmenrohrs materialschlüssig verbindbar.

Beispielsweise erfolgt die Befestigung der Befestigungsvorrichtung an dem Rahmenrohr mittels Schweißen, Löten oder Kleben bzw. einem kombinierten Verfahren.

Gemäß einer beispielhaften Ausführungsform der Erfindung ist ein Klippmechanismus vorgesehen, um die in der Öffnung eingesetzte und positionierte Fahrradkabelhalterung temporär zu fixieren, bevor anschließend eine materialschlüssige Verbindung vorgenommen wird. Selbstverständlich kann statt einem Klippmechanismus auch ein Eindrücken erfolgen, um die Positionierung bzw. temporäre Fixierung vorzunehmen.

Gemäß einer beispielhaften Ausführungsform der Erfindung ist die Befestigungsvorrichtung mit einem Anschlag ausgebildet, der beim Einschieben der Fahrradkabelhalterung in eine Öffnung in einem Rahmenrohr den Einschubweg begrenzt, indem er am Rahmenrohr anliegt.

Bei der Öffnung kann es sich beispielsweise auch um eine Aufnahme, wie bereits beschrieben, handeln.

Durch die Ausbildung eines Anschlags wird gewährleistet, dass der Sitz des zu führenden Kabels in Bezug zum Rahmenrohr stets gleich ist.

Gemäß einer beispielhaften Ausführungsform der Erfindung ist der Anschlag ein umlaufender Kragen.

Gemäß einer beispielhaften Ausführungsform der Erfindung weist der Kragen Einbuchtungen auf, damit das oder die zu führenden Kabel möglichst eng am Rahmenrohr anliegen. Beispielsweise kann der Kragen, zumindest an der Oberseite, auch unterbrochen ausgebildet sein, so dass das Kabel direkt an der Rohraußenseite anliegen kann.

Gemäß einer beispielhaften Ausführungsform der Erfindung sind die Befestigungsvorrichtung und die Haltevorrichtung einstückig ausgebildet.

Beispielsweise ist die Fahrradkabelhalterung aus Kunststoff, zum Beispiel Spritzkunststoff, hergestellt.

Gemäß einer beispielhaften Ausfiihrungsform der Erfindung ist die Fahrradkabelhalterung aus Metall oder einer Metalllegierung hergestellt, zum Beispiel Stahl, Titan oder Aluminium bzw. eine Legierung aus diesen und auch anderen Metallen.

Beispielsweise kann die Fahrradkabelhalterung auch aus Karbon oder einem anderen Faserverbundwerkstoff hergestellt sein.

Für die Befestigungsvorrichtung und die Haltevorrichtung können auch unterschiedliche Werkstoffe verwendet werden, beispielsweise Kunststoff oder ein faserverstärkter Kunststoff für die Befestigungsvorrichtung und Stahl oder Titan für die Haltevorrichtung.

Gemäß einer beispielhaften Ausführungsform der Erfindung ist ein Fahrradrahmen aus Rahmenrohren vorgesehen, wobei wenigstens eines der Rahmenrohre eine Fahrradkabelhalterung nach einer der vorhergehenden Ausführungsformen aufweist.

Gemäß einer beispielhaften Ausführungsform der Erfindung weist wenigstens eines der Rahmenrohre eine Aufnahme in einer Rohrwandung auf, und in die Aufnahme ist eine Fahrradkabelhalterung nach einer der vorhergehenden Ansprüche eingesetzt.

Gemäß einer beispielhaften Ausführungsform der Erfindung handelt es sich bei der Aufnahme um eine Öffnung. Beispielsweise ist die Öffnung als Kreisloch ausgebildet, zum Beispiel an der Oberseite und/oder Unterseite eines Oberrohrs.

Gemäß einer beispielhaften Ausführungsform der Erfindung ist das Loch länglich ausgebildet in Richtung des zu führenden Kabels bzw. des Stegs.

Gemäß einer beispielhaften Ausführungsform der Erfindung ist als Haltemittel ein Steg vorgesehen, der an seinen beiden Enden mit Vorsprüngen derart ausgebildet ist, dass er in einer Öffnung eines Rahmenrohrs an den Öffnungsrändern temporär verbindbar ist, beispielsweise durch Einklippen. Die Befestigungsvorrichtung der Fahrradkabelhalterung kann beispielsweise nur an den Enden punktuell vorgesehen sein oder auch als umlaufender Ring ausgebildet sein.

### KURZE BESCHREIBUNG DER ZEICHNUNGEN

Nachfolgend wird die Erfindung zur weiteren Erläuterung und zum besseren Verständnis anhand von Ausführungsbeispielen unter Bezugnahme auf die beigefügten Zeichnungen näher erläutert. Es zeigen:
- Fig. 1: einen Fahrradrahmen mit mehreren erfindungsgemäßen Fahrradkabelhalterungen;
- Fig. 2: eine erfindungsgemäße Fahrradkabelhalterung in der Seitenansicht;
- Fig. 3: einen Schnitt durch die Fahrradkabelhalterung gemäß Fig. 2;
- Fig. 4: eine Aufsicht auf die Fahrradkabelhalterung gemäß Fig. 3;
- Fig. 5: einen Schnitt quer durch die Fahrradkabelhalterung gemäß Fig. 3 und 4;
- Fig. 6: die Fahrradkabelhalterung aus Fig. 4, eingesetzt in ein Rahmenrohr des Fahrradrahmens nach Fig. 1;
- Fig. 7: einen Schnitt quer durch die Fahrradkabelhalterung nach Fig. 5 mit zwei Fahrradkabeln, die mittels eines Haltemittels geführt sind;
- Fig. 8: eine schematische Darstellung der Fahrradkabelhalterung im Schnitt mit dem Haltemittel während des Einführens;
- Fig. 9: die Fahrradkabelhalterung nach Fig. 8 mit dem Haltemittel vor dem Verspannen;
- Fig. 10: eine perspektivische Ansicht der Fahrradkabelhalterung aus den Figuren 2 bis 9;
- Fig. 11: einen Schnitt durch eine weitere Ausführungsform der Erfindung; und
- Fig. 12: eine Aufsicht der Ausführungsform nach Fig. 11.

### DETAILLIERTE BESCHREIBUNG BEISPIELHAFTER

### AUSFÜHRUNGSFORMEN

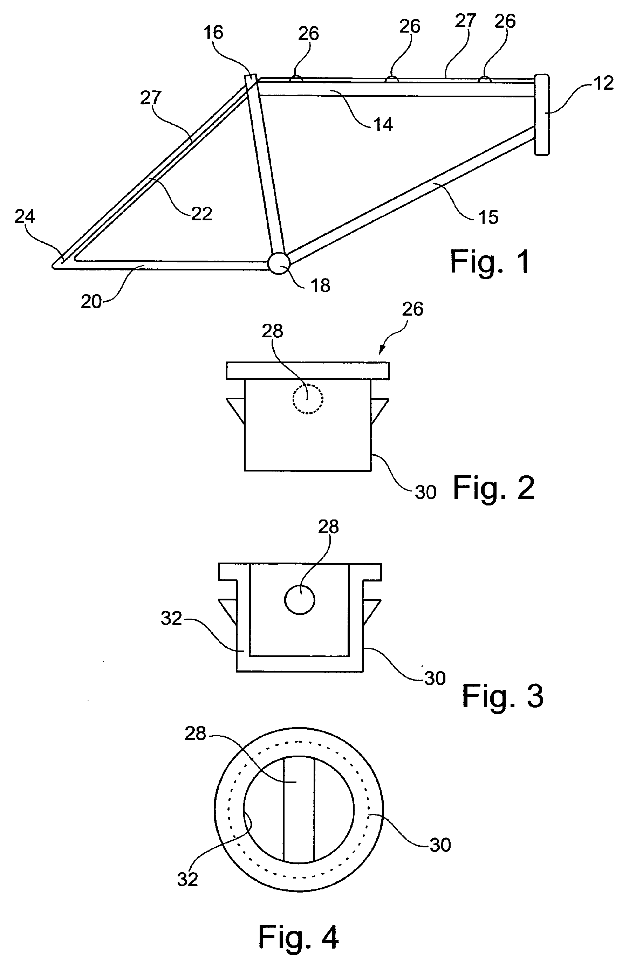

In Fig. 1 ist beispielhaft ein Fahrradrahmen 10 aus unterschiedlichen Rahmenteilen gezeigt. Beispielsweise weist der Fahrradrahmen 10 einen Bereich 12 zur Aufnahme eines Gabelschafts einer nicht weiter dargestellten Gabel bzw. zur Aufnahme einer Lenkeinrichtung auf. Davon erstrecken sich ein in der Zeichnung nahezu horizontal verlaufendes Oberrohr 14 und ein schräg nach unten abfallendes Unterrohr 15. Am anderen Ende des Oberrohrs 14 ist ein Sattelrohr 16 zur Aufnahme einer nicht weiter gezeigten Sattelstütze angeordnet, wobei sich das Sattelrohr 16 nach schräg unten erstreckt, wo es im Bereich des anderen Ende des Unterrohrs 15 mit einer Aufnahme 18 zur Aufnahme eines nicht näher gezeigten Tretlagers verbunden ist. Vom Bereich des Tretlagers 18 aus erstrecken sich zwei hintere Ausfallstreben 20, von denen in der Zeichnung nur eine zu sehen ist. Vom oberen Ende des Sattelrohrs 16 aus erstreckt sich ein weiteres Paar Ausfallstreben 22, das mit den jeweiligen Ausfallstreben 20 im Bereich eines hinteren Ausfallendes 24 verbunden ist.

Gemäß der vorliegenden Erfindung kann der Fahrradrahmen 10 auch andere Geometrien aufweisen, insbesondere auch mit zusätzlichen Gelenkstellen und in diesem Zusammenhang eingesetzten Dämpfungselementen versehen sein, wie es beispielsweise im Bereich von Sportfahrradrahmen, insbesondere Mountain-Bike-Rahmen, der Fall ist.

Erfindungsgemäß weist der Fahrradrahmen 10 beispielsweise auf der Oberseite des Oberrohrs 14 mehrere Fahrradkabelhalterungen 26 auf zum Führen eines Kabels 27. Die Fahrradkabelhalterungen 26 sollen anhand der weiteren Figuren detaillierter beschrieben werden.

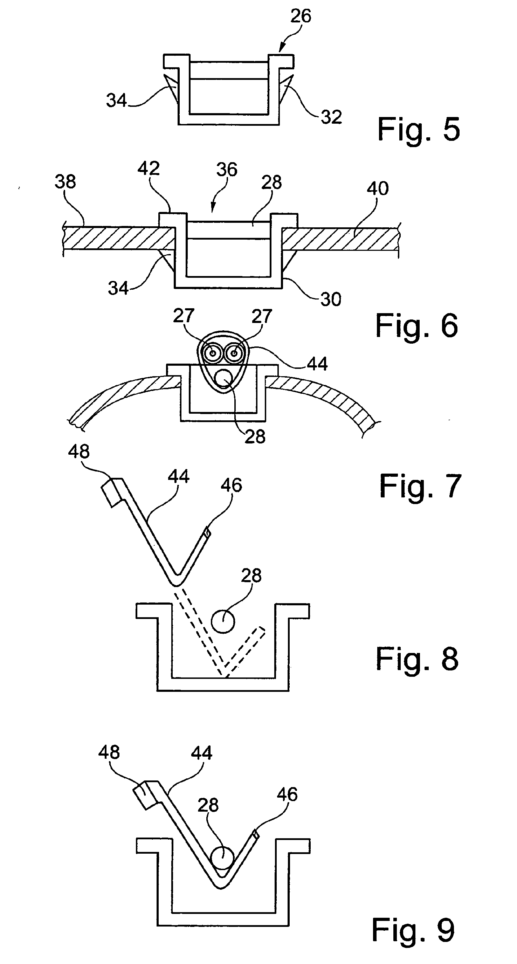

Fig. 2 zeigt die Fahrradkabelhalterung 26 in einer Seitenansicht ohne Kabel. Die Fahrradkabelhalterung 26 weist eine Haltevorrichtung 28 und eine Befestigungsvorrichtung 30 auf. Die Befestigungsvorrichtung ist in eine Aufnahme in einer Rohrwandung eines Rahmenrohrs, beispielsweise des Oberrohrs 14, einsetzbar und mit der Wandung des Rahmenrohrs verbindbar (siehe auch Fig. 5).

Die Haltevorrichtung 28 ist mit der Befestigungsvorrichtung 30 verbunden und zum Festlegen eines das zu haltende Kabel zumindest teilweise umgreifenden Haltemittels 28 (siehe Fig. 7) ausgebildet.

Die Befestigungsvorrichtung 30 weist eine umlaufende Wandung 32 auf, und die Haltevorrichtung 28 ist zwischen den zwei gegenüberliegenden Wandbereichen der umlaufenden Wandung 32 angeordnet. In Fig. 3 ist ersichtlich, dass die Befestigungsvorrichtung 30 becherförmig ausgebildet ist, wobei das einzuführende Ende, in Fig. 3 das untere Ende, geschlossen ist und die Haltevorrichtung 30 im Bereich der Öffnung, das heißt im oberen Bereich, angeordnet ist. Die umlaufende Wandung ist rohrförmig ausgebildet und weist in der Aufsicht (siehe Fig. 4) eine kreisrunde Grundrissform auf.

Gemäß einer weiteren Ausführungsform, die jedoch nicht näher dargestellt ist, ist die Befestigungsvorrichtung 30 in Richtung der Haltevorrichtung 28 länglich gestreckt ausgebildet, beispielsweise in Form eines in Richtung der Haltevorrichtung 28 gestreckt ausgebildeten Ovals bzw. Ellipsoids im Grundriss bzw. in der Aufsicht.

Gemäß einer nicht gezeigten Ausführung ist die umlaufende Wandung rohrförmig ausgebildet und die Haltevorrichtung erstreckt sich zwischen zwei gegenüberliegenden Rohrwandbereichen. Beispielsweise ist die Haltevorrichtung nach unten, d.h. in Richtung des Rohrinneren hin, offen ausgebildet. Dies erlaubt neben dem Halten von Kabeln beispielsweise zusätzlich auch ein Einführen eines oder mehrerer Kabel, bzw. anderer Leitungen, in das Rohrinnere. Je nach Einsatzzweck ist ein zusätzliches Verschlusselement vorgesehen, mit dem die unten offene Haltevorrichtung verschlossen werden kann. Das Verschlusselement kann dabei auch an eventuell einzuführende Leitungen anpassbar sein.

Die Fahrradkabelhalterung 26 ist mittels der Befestigungsvorrichtung mit der Wandung eines Rahmenrohrs, beispielsweise des Oberrohrs 14, formschlüssig verbindbar. Dazu ist in den Figuren zu sehen, dass an der Außenseite der becherförmigen Wandung 32 mehrere nach außen abstehende Vorsprünge 34 vorgesehen sind, die ausgebildet sind, um im eingesetzten Zustand die Rohrwandung des Rahmenrohrs im Bereich der Öffnungsränder zu hintergreifen, worauf im Zusammenhang mit Fig. 7 bzw. Fig. 8 noch näher eingegangen werden soll.

Die hintergreifenden Vorsprünge 34 sind gemäß einer Ausführungsform federnd ausgebildet, das heißt, beim Eindrücken der Fahrradkabelhalterung 28 in die Aufnahme einer Rohrwandung werden die Vorsprünge 34 zusammengedrückt, um nach Passieren der Öffnungsränder nach außen wieder aufzuklappen bzw. auszufedern oder sich zu entfalten, um so das Rahmenrohr zu hintergreifen.

Wie in Fig. 6 ersichtlich ist, ist die bereits erwähnte Aufnahme in dem Rahmenrohr, beispielsweise des Oberrohrs 14, als Öffnung 36 ausgebildet, wobei das Rahmenrohr durch die Rohrwandungsbereiche 38 bzw. 40 in einem Ausschnitt angedeutet ist.

Die becherförmige Befestigungsvorrichtung 30 ist in Fig. 6 in die Öffnung 36 eingesetzt, und die Vorsprünge 34 hintergreifen die beiden Rohrwandbereiche 38 und 40 in der Nähe des Offnungsrandes.

Die Fahrradkabelhalterung 26 weist einen Anschlag auf, der beim Einschieben der Fahrradkabelhalterung in die Öffnung 36 den Einschubweg begrenzt, indem er am Rahmenrohr bzw. der Außenseiten der Rohrwandungsbereiche 38 bzw. 40 anliegt. Wie aus den Figuren 2 bis 6 ersichtlich ist, ist der Anschlag beispielsweise als umlaufender Kragen 42 ausgebildet.

Die Haltevorrichtung 28 ist als Steg ausgebildet, an dem das Kabel durch Umgreifen eines Haltemittels 44 festgelegt bzw. befestigt oder geführt werden kann. Der Steg ist an beiden Enden mit der Befestigungsvorrichtung verbunden, was in beispielsweise Fig. 5 ersichtlich ist, wo der Steg zwischen den beiden gegenüberliegenden Wandungen 32 verläuft. Bei dem Haltemittel 44 handelt es sich beispielsweise um einen Kabelbinder 46, dessen Einführen in Fig. 8 und 9 angedeutet ist.

Gemäß einer nicht gezeigten Ausführungsvariante ist der Steg nur an einem Ende mit der Befestigungsvorrichtung verbunden. Das Haltemittel kann dann schlaufenartig über das freie Ende geführt werden. Wenn das freie Ende eine von dem zu befestigenden Kabel wegweisende Krümmung oder einen Vorsprung aufweist, kann ein Abrutschen des Haltemittels verhindert werden.

Zum Einführen bzw. Umgreifen des Stegs kann der Kabelbinder 44 an seinem vorderen Ende 46 zunächst umgeknickt werden, so dass er die in Fig. 8 angedeutete hakenförmige Gestalt annimmt. Anschließend wird er in die Öffnung der Befestigungsvorrichtung 26 derart eingeschoben, dass das vordere Ende 46 die Haltevorrichtung 28 bzw. den Steg hintergreift und anschließend so weit angehoben, dass die vordere Spitze des Kabelbinders 46 aus dem becherförmigen Fahrradkabelhalter hervorragt und dort erfasst werden kann. Anschließend wird das vordere Ende 46 in eine am hinteren Ende 48 vorgesehene Verrastungseinrichtung eingeführt und das zu führende Kabel bzw. die in Fig. 7 gezeigten Kabel 27 durch Umgreifen an der Haltevorrichtung 28 fixiert und durch Spannen des Kabelbinders 44 an dem Steg derart angelegt, dass das Kabel bzw. die Kabel 27 sicher an dem Oberrohr 14 des Rahmens 10 gehalten sind.

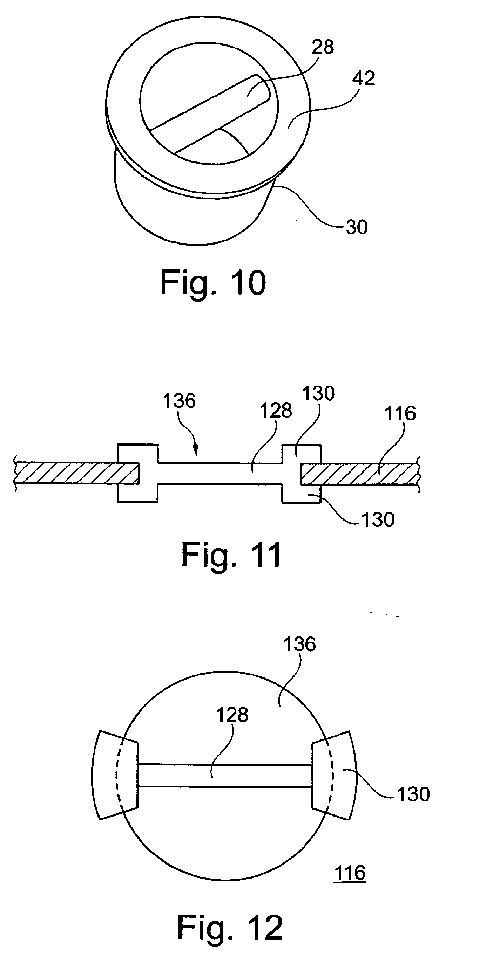

Zum besseren Verständnis ist in Fig. 10 eine perspektivische Darstellung der Fahrradkabelhalterung 26 gezeigt, wobei die bereits beschriebenen Verrastungseinrichtungen bzw. Vorsprünge 34 sowie das umgebende Rahmenrohr nicht dargestellt sind.

Gemäß einer weiteren, jedoch in den Figuren nicht dargestellten Ausführungsform ist der Außendurchmesser der Befestigungsvorrichtung 30 so ausgelegt, dass er geringfügig größer ist als der Innendurchmesser der Öffnung 36 des Rahmenrohrs. Durch Einpressen oder Eindrücken bzw. auch Einschlagen der Fahrradkabelhalterung sind Klemmkräfte erreichbar, die ein zuverlässiges Halten der Fahrradkabelhalterung in der Aufnahme des Rahmenrohrs gewährleisten.

Gemäß einer weiteren Ausführungsform (nicht näher gezeigt) ist die Befestigungsvorrichtung 26 mit der Rohrwandung bzw. den Rohrwandungsbereichen 38, 40 materialschlüssig verbindbar, zum Beispiel mittels Schweißen, Löten oder auch durch Kleben.

Gemäß einer beispielhaften Ausführungsform dienen die Vorsprünge 34 dem Einsetzen und Positionieren bzw. temporären Fixieren, bevor anschließend eine materialschlüssige Verbindung erfolgt, um einen dauerhaften Halt zu gewährleisten, was sich insbesondere für Fahrradrahmen anbietet, die einer starken Beanspruchung, wie beispielsweise Mountain-Bike-Rahmen, unterliegen.

Gemäß einer beispielhaften Ausführungsform sind die Befestigungsvorrichtung 30 und die Haltevorrichtung 28 einstückig ausgebildet, beispielsweise aus Spritzkunststoff.

In einer alternativen Ausführungsform ist die Fahrradkabelhalterung 26 aus einem Metall oder einer Metalllegierung hergestellt, zum Beispiel aus Stahl, Titan oder Aluminium.

Gemäß einer beispielhaften Ausführungsform sind die Befestigungsvorrichtung 30 und die Haltevorrichtung 28 aus einem metallenen Spritz- oder Gusswerkstoff ausgebildet.

Gemäß einer weiteren Ausführungsform ist die Fahrradkabelhalterung 26 aus Karbon oder einem anderen Faserverbundwerkstoff hergestellt, was sich insbesondere für Fahrradrahmen aus ähnlichen Materialien eignet.

Gemäß einer weiteren Ausführungsform sind für die Befestigungsvorrichtung 30 und die Haltevorrichtung 28 unterschiedliche Werkstoffe verwendet, beispielsweise Kunststoff oder ein faserverstärkter Kunststoff für die Befestigungsvorrichtung 30 und Stahl oder Titan für die Haltevorrichtung 28 bzw. den in den Figuren gezeigten Steg.

In Fig. 11 ist schließlich noch eine weitere Ausführungsform dargestellt, bei der als Haltemittel ein Steg 128 vorgesehen ist, der an seinen beiden Enden mit Vorsprüngen 130 derart ausgebildet ist, dass er in einer Öffnung 132 eines Rahmenrohrs 116 an den Öffnungsrändern temporär verbindbar ist, beispielsweise durch Einklippen. Fig. 12 zeigt die Aufsicht der Ausführungsform nach Fig. 11, jedoch ebenfalls ohne die an dem Steg 128 zu führenden Kabel.

## Patentansprüche

1. Fahrradkabelhalterung (26) zum Führen wenigstens eines Kabels (27) an einem Fahrradrahmen (10), mit:
- einer Haltevorrichtung (28);
- einer Befestigungsvorrichtung (30); und
- einem Haltemittel (44);
wobei die Befestigungsvorrichtung (30) eine umlaufende Wandung (32) aufweist und in eine Aufnahme in einer Rohrwandung eines Rahmenrohrs eines Fahrradrahmens einsetzbar ist und mit der Wandung des Rahmenrohrs verbindbar ist;
wobei die Haltevorrichtung (28) ein Steg ist, an dem das wenigstens eine Kabel (27) festlegbar ist, wobei der Steg zwischen zwei gegenüberliegenden Wandbereichen der umlaufenden Wandung (32) angeordnet ist; wobei der Steg wenigstens an einem Ende mit der Wandung (32) verbunden ist; und wobei der Steg zum Festlegen des Haltemittels (44) ausgebildet ist; und
wobei das Haltemittel (44) ein Zugelement aufweist, welches um das zu haltende Kabel (27) und um den Steg führbar ist, wobei das Haltemittel eine Festlegungsvorrichtung (48) zum Verspannen des Zugelements aufweist.

2. Fahrradkabelhalterung nach dem vorhergehenden Anspruch, bei der das Haltemittel integral mit der Haltevorrichtung ausgebildet ist.

3. Fahrradkabelhalterung nach Anspruch 1 oder 2, bei der die Befestigungsvorrichtung (30) becherförmig ausgebildet ist, wobei das einzuführende Ende geschlossen ist und die Haltevorrichtung (28) im Bereich der Öffnung angeordnet ist.

4. Fahrradkabelhalterung nach einem der vorhergehenden Ansprüche, bei der die Befestigungsvorrichtung (30) mit der Rohrwandung des Rahmenrohrs formschlüssig verbindbar ist.

5. Fahrradkabelhalterung nach einem der vorhergehenden Ansprüche, bei der an der Befestigungsvorrichtung mindestens zwei nach außen abstehende Vorsprünge (34) vorgesehen sind, die ausgebildet sind, um im eingesetzten Zustand die Rohrwandung des Rahmenrohrs (14) im Bereich der Öffnungsränder zu hintergreifen.

6. Fahrradkabelhalterung nach einem der vorhergehenden Ansprüche, bei der die Befestigungsvorrichtung (30) mit einem Anschlag ausgebildet ist, der beim Einschieben der Fahrradkabelhalterung in eine Öffnung in einem Rahmenrohr den Einschubweg begrenzt, indem er am Rahmenrohr anliegt.

7. Fahrradrahmen aus Rahmenrohren, wobei wenigstens eines der Rahmenrohre eine Aufnahme in einer Rohrwandung aufweist und in die Aufnahme eine Fahrradkabelhalterung nach einem der vorhergehenden Ansprüche eingesetzt ist.

## Claims

1. A bicycle cable holder (26) for guiding at least one cable (27) on a bicycle frame (10), comprising:
- a holding device (28);
- a fastening device (30); and
- a holding means (44);
wherein the fastening device (30) has a circumferential wall (32) and is insertedable into a receptacle in a tube wall of a frame tube of a bicycle frame and is connectable to the wall of the frame tube;
wherein the holding device (28) is a bar on which the at least one cable (27) is fixable, wherein the bar is arranged between two opposing wall regions of the circumferential wall (32); wherein the bar is connected at least at one end to the wall (32); and wherein the bar is formed for fixing the holding means (44); and
wherein the holding means (44) comprises a tension element which can be fed around the cable (27) to be held and around the bar, wherein the holding means has a fixing device (48) for clamping the tension element.

2. The bicycle cable holder according to the preceding claim, wherein the holding means is formed integrally with the holding device.

3. The bicycle cable holder according to claim 1 or claim 2, wherein the fastening device (30) is cup-shaped, wherein the end to be inserted is closed and the holding device (28) is arranged in the region of the opening.

4. The bicycle cable holder according to any one of the preceding claims, wherein the fastening device (30) can be positively connected to the tube wall of the frame tube.

5. The bicycle cable holder according to any one of the preceding claims, wherein on the fastening device at least two outwardly protruding projections (34) are provided which are formed so as to engage in the inserted state behind the frame tube's (14) tube wall in the region of the opening edges.

6. The bicycle cable holder according to any one of the preceding claims, wherein the fastening device (30) is provided with a stopper which, when inserting the bicycle cable holder into an opening in a frame tube, limits the insertion distance by resting against the frame tube.

7. A bicycle frame made from frame tubes, wherein at least one of the frame tubes has a receptacle in a tube wall, and a bicycle cable holder according to any one of the preceding claims is inserted in said receptacle.

## Revendications

1. Fixation de câble de bicyclette (26) pour le guidage d'au moins un câble (27) sur un cadre de bicyclette (10), comprenant :
- un dispositif de retenue (28) ;
- un dispositif de fixation (30) ; et
- un moyen de retenue (44) ;
le dispositif de fixation (30) présentant une paroi périphérique (32), et pouvant être mis en place dans un logement, prévu dans une paroi d'un tube d'un cadre de bicyclette, et pouvant être assemblé avec la paroi du tube de cadre ;
le dispositif de retenue (28) étant une traverse, sur laquelle peut être fixé au moins un câble (27), la traverse étant disposée entre deux zones de paroi opposées de la paroi périphérique (32) ; la traverse étant assemblée avec la paroi (32) au moins sur une extrémité ; et la traverse étant réalisée pour la fixation du moyen de retenue (44) ; et
le moyen de retenue (44) présentant un élément de traction, qui peut être guidé autour du câble (27) à maintenir et autour de la traverse, le moyen de retenue présentant un dispositif de blocage (48) pour le serrage de l'élément de traction.

2. Fixation de câble de bicyclette selon la revendication précédente, dans laquelle le moyen de retenue est réalisé intégralement avec le dispositif de retenue.

3. Fixation de câble de bicyclette selon l'une des revendications 1 et 2, dans laquelle le dispositif de fixation (30) est réalisé en forme de godet, l'extrémité à introduire étant fermée et le dispositif de retenue (28) étant disposé dans la zone de l'ouverture.

4. Fixation de câble de bicyclette selon l'une des revendications précédentes, dans laquelle le dispositif de fixation (30) peut être assemblé par coopération de forme avec la paroi du tube de cadre.

5. Fixation de câble de bicyclette selon l'une des revendications précédentes, dans laquelle au moins deux saillies (34) dépassant vers l'extérieur sont prévues sur le dispositif de fixation, lesquelles saillies sont réalisées pour enserrer, dans l'état de montage, la paroi du tube de cadre (14) dans la zone des bords d'ouverture.

6. Fixation de câble de bicyclette selon l'une des revendications précédentes, dans laquelle le dispositif de fixation (30) est réalisé avec une butée qui limite la course d'insertion, lorsque la fixation de câble de bicyclette est insérée dans une ouverture d'un tube de cadre, en s'appliquant alors sur ce dernier.

7. Cadre de bicyclette constitué de tubes de cadre, au moins l'un des tubes de cadre présentant un logement dans une paroi de tube, et une fixation de câble de bicyclette selon l'une des revendications précédentes étant mise en place dans le logement.
